# EUROPEAN PATENT APPLICATION

(11) **EP 4 064 084 A1**
(43) Date of publication of application: **28.09.2022**
(21) Application number: 20907232.1
(22) Date of filing: 23.09.2020
(51) Int. Cl.: G06F 21/44

(54) **PASSWORD MANAGEMENT METHOD AND RELATED DEVICE**

(30) Priority: 27.12.2019 CN 201911390163
(71) Applicant: Huawei Technologies Co., Ltd., Shenzhen, Guangdong 518129 (CN)
(72) Inventor: GAO, Peng, Shenzhen, Guangdong 518129 (CN)
(74) Representative: Pfenning, Meinig & Partner mbB
(86) International application number: PCT/CN2020/117110
(87) International publication number: WO 2021/129003

(57) **Abstract**

Embodiments of this application disclose a password management method and a related apparatus. A TPM owner password is stored in a chip in a ciphertext form, so that security of the TPM owner password in a storage process can be improved. The method in embodiments of this application includes: A chip encrypts a first TPM owner password by using a first key and a preset encryption algorithm, to obtain a first ciphertext corresponding to the first TPM owner password. After obtaining the first ciphertext, the chip stores the first ciphertext in a secure storage area in the chip.

## Description

This application claims priority to Chinese Patent Application No. 201911390163.4, filed with the China National Intellectual Property Administration on December 27, 2019 and entitled "PASSWORD MANAGEMENT METHOD AND RELATED APPARATUS", which is incorporated herein by reference in its entirety.

### TECHNICAL FIELD

This application relates to the field of information security technologies, and in particular, to a password management method and a related apparatus.

### BACKGROUND

A trusted platform module (trusted platform module, TPM) may be applied to a device such as a computer or a server, or may be applied to a network device such as a router or a switch, and can ensure information security of the device.

Each TPM has a TPM owner password (TPM owner password), and the TPM owner password can affect use of most functions of the TPM. In the network device, when a software program in the network device needs to use some functions of the TPM, the TPM owner password usually needs to be transferred to the TPM. Only when the TPM owner password is correct, the software program can use the related functions of the TPM.

Currently, the software program in the network device usually stores the TPM owner password in a flash memory (Flash Memory) in a plaintext form, and depends only on a right access control mechanism in the flash memory to restrict a process of reading the TPM owner password. However, in a current storage manner of the TPM owner password, there is a risk that an unauthorized process bypasses the right access control mechanism to directly obtain the TPM owner password, and consequently security of the TPM owner password is relatively low.

### SUMMARY

Embodiments of this application provide a password management method and a related apparatus. A chip encrypts a TPM owner password, and stores a ciphertext obtained after the encryption in the chip, so that the TPM owner password is stored in the chip in a ciphertext form. This improves security of the TPM owner password in the storage process, and effectively ensures secure use of the TPM owner password.

According to a first aspect of embodiments of this application, a password management method is provided. The method includes: When a TPM owner password needs to be securely stored, a chip may encrypt a first TPM owner password by using a first key and a preset encryption algorithm, to obtain a first ciphertext. The chip stores the first ciphertext in a secure storage area in the chip. The secure storage area may be a storage area that does not provide an access interface for an external entity of the chip, that is, the chip does not support the external entity in accessing the secure storage area.

In embodiments, the chip encrypts the TPM owner password, and stores a ciphertext obtained after the encryption in the chip, so that the TPM owner password is securely stored in the chip in a ciphertext form. This reduces a risk of disclosure of the TPM owner password in the storage process, improves security of the TPM owner password in the storage process, and effectively ensures secure use of the TPM owner password.

In a possible implementation, the first key is a key generated by the chip, and the first key is stored in the chip in a plaintext form. In this way, before the chip encrypts the first TPM owner password by using the first key, the chip first obtains the first key from an area in which the first key is stored, and then encrypts the first TPM owner password.

In a possible implementation, the first key is a key generated by the chip, and the first key is stored in the chip in a ciphertext form. In this way, before the chip encrypts the first TPM owner password by using the first key, the chip may first obtain a ciphertext corresponding to the first key from an area in which the ciphertext is stored, decrypts the ciphertext to obtain the first key, and encrypts the first TPM owner password by using the first key.

In a possible implementation, the first key may be a key derived from a root key of the chip, or may be a key generated based on a physical unclonable function (physical unclonable function, PUF).

In a possible implementation, before the chip encrypts the first TPM owner password by using the first key, the method further includes: The chip obtains a first request, where the first request may be sent by an entity to the chip, and the first request carries the first TPM owner password, to indicate the chip to store the first TPM owner password. The chip stores the first TPM owner password based on the first request, that is, after encrypting the first TPM owner password by using the first key, to obtain the first ciphertext, the chip stores the first ciphertext in the secure storage area in the chip.

In a possible implementation, after the chip stores the first ciphertext in the secure storage area in the chip, the method further includes: The chip obtains a second request sent by a first entity, where the second request is used to request the chip to decrypt the first ciphertext corresponding to the first TPM owner password, and return the first TPM owner password obtained through decryption to the first entity. The chip decrypts the first ciphertext based on the second request by using the first key, to obtain the first TPM owner password. The chip sends the first TPM owner password to the first entity, so that after receiving the first TPM owner password, the first entity can invoke, in a TPM, a related function of performing verification on the first TPM owner password.

In embodiments, after the chip obtains the second request from the first entity, the chip decrypts the first ciphertext by using the first key, to obtain the first TPM owner password, and sends the first TPM owner password to the first entity. This ensures that the first entity can securely use the TPM owner password stored in the chip.

In a possible implementation, after the chip stores the first ciphertext in the secure storage area in the chip, the method further includes: The chip obtains a third request sent by a second entity, where the third request carries a second TPM owner password, to indicate the chip to update the first TPM owner password to the second TPM owner password. The chip encrypts the second TPM owner password by using the first key, to obtain a second ciphertext. The chip replaces the first ciphertext in the secure storage area with the second ciphertext.

In embodiments, the chip obtains the third request sent by the second entity, encrypts the second TPM owner password obtained after update by using the first key, to obtain the second ciphertext, and stores the second ciphertext in the secure storage area. This implements update of the TPM owner password, and ensures security of the TPM owner password.

In a possible implementation, after the chip stores the first ciphertext in the secure storage area, the method further includes: When the TPM owner password needs to be migrated, for example, migrated to another device, a third entity may send a fourth request to the chip. The chip obtains the fourth request sent by the third entity, where the fourth request carries a second key, and the second key is a key that is not generated by the chip. The chip decrypts the first ciphertext by using the first key, to obtain the first TPM owner password. The chip encrypts the first TPM owner password by using the second key, to obtain a third ciphertext. The chip sends the third ciphertext to the third entity.

In embodiments, when the chip obtains the fourth request sent by the third entity, the chip decrypts the first ciphertext to obtain the first TPM owner password, encrypts the first TPM owner password based on an external key provided by the third entity, and returns the third ciphertext obtained after the encryption to the third entity. This implements migration of the TPM owner password in a ciphertext form, and improves flexibility of the solution.

In a possible implementation, that a chip encrypts a first TPM owner password by using a first key includes: The chip encrypts the first TPM owner password by using the first key and plaintext information, where the plaintext information is encryption information stored in the chip in a plaintext form. The encryption information is information used to encrypt the first TPM owner password. For example, the plaintext information may include one or more of a salt and an initialization vector (initialization vector, IV).

According to a second aspect of embodiments of this application, a chip is provided. The chip includes a processor and a memory. The processor is configured to encrypt a first TPM owner password by using a first key, to obtain a first ciphertext. The memory is configured to store the first ciphertext in a secure storage area.

In a possible implementation, the first key is a key generated by the chip, and the first key is stored in the chip in a plaintext form.

In a possible implementation, the first key is a key generated by the chip, and the first key is stored in the chip in a ciphertext form.

In a possible implementation, the first key is a key derived from a root key of the chip.

In a possible implementation, the chip further includes a communications interface, and the communications interface is configured to obtain a first request, where the first request carries the first TPM owner password. The memory is further configured to store the first TPM owner password.

In a possible implementation, the communications interface obtains a second request sent by a first entity. The processor is further configured to decrypt the first ciphertext based on the second request by using the first key, to obtain the first TPM owner password. The communications interface is further configured to send the first TPM owner password to the first entity.

In a possible implementation, the communications interface is configured to obtain a third request sent by a second entity, where the third request carries a second TPM owner password. The processor is further configured to: encrypt the second TPM owner password by using the first key, to obtain a third ciphertext; and replace the first ciphertext in the secure storage area with the third ciphertext.

In a possible implementation, the communications interface is configured to obtain a fourth request sent by a third entity, where the fourth request carries a second key. The processor is further configured to decrypt the first ciphertext by using the first key, to obtain the first TPM owner password. The processor is further configured to encrypt the first TPM owner password by using the second key, to obtain a fourth ciphertext. The communications interface is further configured to send the fourth ciphertext to the third entity.

In a possible implementation, the processor is further configured to encrypt the first TPM owner password by using the first key and plaintext information, where the plaintext information is encryption information stored in the chip in a plaintext form.

According to a third aspect of embodiments of this application, a chip is provided. The chip includes a processing unit and a storage unit. The processing unit is configured to encrypt a first TPM owner password by using a first key, to obtain a first ciphertext. The storage unit is configured to store the first ciphertext in a secure storage area.

In a possible implementation, the first key is a key generated by the chip, and the first key is stored in the chip in a plaintext form.

In a possible implementation, the first key is a key generated by the chip, and the first key is stored in the chip in a ciphertext form.

In a possible implementation, the first key is a key derived from a root key of the chip.

In a possible implementation, the chip further includes a transceiver unit. The transceiver unit is configured to obtain a first request, where the first request carries the first TPM owner password. The storage unit is further configured to store the first TPM owner password.

In a possible implementation, the transceiver unit obtains a second request sent by a first entity. The processing unit is further configured to decrypt the first ciphertext based on the second request by using the first key, to obtain the first TPM owner password. The transceiver unit is further configured to send the first TPM owner password to the first entity.

In a possible implementation, the transceiver unit is configured to obtain a third request sent by a second entity, where the third request carries a second TPM owner password. The processing unit is further configured to: encrypt the second TPM owner password by using the first key, to obtain a third ciphertext; and replace the first ciphertext in the secure storage area with the third ciphertext.

In a possible implementation, the transceiver unit is configured to obtain a fourth request sent by a third entity, where the fourth request carries a second key. The processing unit is further configured to decrypt the first ciphertext by using the first key, to obtain the first TPM owner password. The processing unit is further configured to encrypt the first TPM owner password by using the second key, to obtain a fourth ciphertext. The transceiver unit is further configured to send the fourth ciphertext to the third entity.

In a possible implementation, the processing unit is further configured to encrypt the first TPM owner password by using the first key and plaintext information, where the plaintext information is encryption information stored in the chip in a plaintext form.

According to a fourth aspect of embodiments of this application, a network device is provided, including the chip in any implementation of the second aspect or the third aspect.

According to a fifth aspect of embodiments of this application, a computer storage medium is provided, including computer instructions. When the computer instructions are run on a processor, a chip is enabled to perform the password management method in any implementation of the first aspect.

According to a sixth aspect of embodiments of this application, a computer program product is provided. When the computer program product is run on a processor, a computer is enabled to perform the password management method in any implementation of the first aspect.

The implementations provided in this application may be combined with each other without conflict.

It can be learned from the foregoing technical solutions that embodiments of this application have the following advantages.

Embodiments of this application provide a password management method and a related apparatus. A chip encrypts a TPM owner password, and stores a ciphertext obtained after the encryption in the chip, so that the TPM owner password is stored in the chip in a ciphertext form. This improves security of the TPM owner password in the storage process, and effectively ensures secure use of the TPM owner password.

### BRIEF DESCRIPTION OF DRAWINGS

FIG. 1(a) to FIG. 1(c) are a schematic diagram of storing and using a TPM owner password according to an embodiment of this application;
FIG. 2 is a schematic diagram of an application scenario of a password management method according to an embodiment of this application;
FIG. 3 is a schematic flowchart of a password management method according to an embodiment of this application;
FIG. 4 is a schematic flowchart of a key generation method according to an embodiment of this application;
FIG. 5 is a schematic flowchart of performing encryption by using a key and an IV according to an embodiment of this application;
FIG. 6 is a schematic flowchart of a password management method according to an embodiment of this application;
FIG. 7 is a schematic flowchart of a password management method according to an embodiment of this application;
FIG. 8 is a schematic flowchart of a password update method according to an embodiment of this application;
FIG. 9 is a schematic flowchart of a password migration method according to an embodiment of this application;
FIG. 10 is a schematic flowchart of a password management method according to an embodiment of this application;
FIG. 11 is a schematic diagram of a structure of a chip according to an embodiment of this application;
FIG. 12 is a schematic diagram of a structure of a chip according to an embodiment of this application; and
FIG. 13 is a schematic diagram of a structure of a network device according to an embodiment of this application.

### DESCRIPTION OF EMBODIMENTS

To make objectives, technical solutions, and advantages of this application clearer, the following describes embodiments of this application with reference to accompanying drawings. It is clear that the described embodiments are merely some but not all of the embodiments of this application. A person of ordinary skill in the art may learn that, as a new application scenario emerges, the technical solutions provided in embodiments of this application are also applicable to a similar technical problem.

In this specification, the claims, and the accompanying drawings of this application, the terms "first", "second", and the like are intended to distinguish between similar objects but do not necessarily indicate a specific order or sequence. It should be understood that data used in such a way are interchangeable in proper circumstances, so that embodiments described herein can be implemented in another order than the order illustrated or described herein. In addition, the terms "include" and "have" and any variations thereof are intended to cover non-exclusive inclusions. For example, a process, method, system, product, or device including a series of steps or modules is not necessarily limited to the clearly listed steps or modules, but may include other steps or modules that are not clearly listed or are inherent to the process, method, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved. Division into units in this application is logical division and may be other division in an actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

A TPM may be applied to a host device such as a computer or a server, or may be applied to a network device such as a router or a switch. Usually, the TPM may be embedded into the host device or the network device in a pluggable manner. The TPM works cooperatively with a processor in the host device or the network device, so that information security of the host device or the network device can be effectively ensured.

Generally, each TPM has a unique TPM owner password, and the TPM owner password can affect use of most functions of the TPM. For example, only when a TPM owner password is known, functions of the TPM such as resetting a TPM lock state, owner authorization, establishing a non-volatile random access memory (Non-Volatile Random Access Memory, NVRAM) index, or key persistent storage can be invoked.

When the TPM is applied to the host device such as the computer or the server, the TPM owner password may be usually input or modified in a command line input manner. When the TPM is applied to the network device such as the router or the switch, command line input cannot be performed. Therefore, when a process in the network device needs to use the TPM owner password, the process usually directly transfers the TPM owner password to the TPM, to invoke a related function of the TPM. Therefore, when the TPM is applied to the network device, how to securely store the TPM owner password in the network device is often involved.

Currently, in the host device such as the computer or the server, the TPM owner password may usually be securely stored by using a whole disk encryption service technology or an active directory service technology. Because the host device such as the computer runs in a different manner from the network device such as the router or the switch, the whole disk encryption service technology and the active directory service technology cannot be applied to the network device.

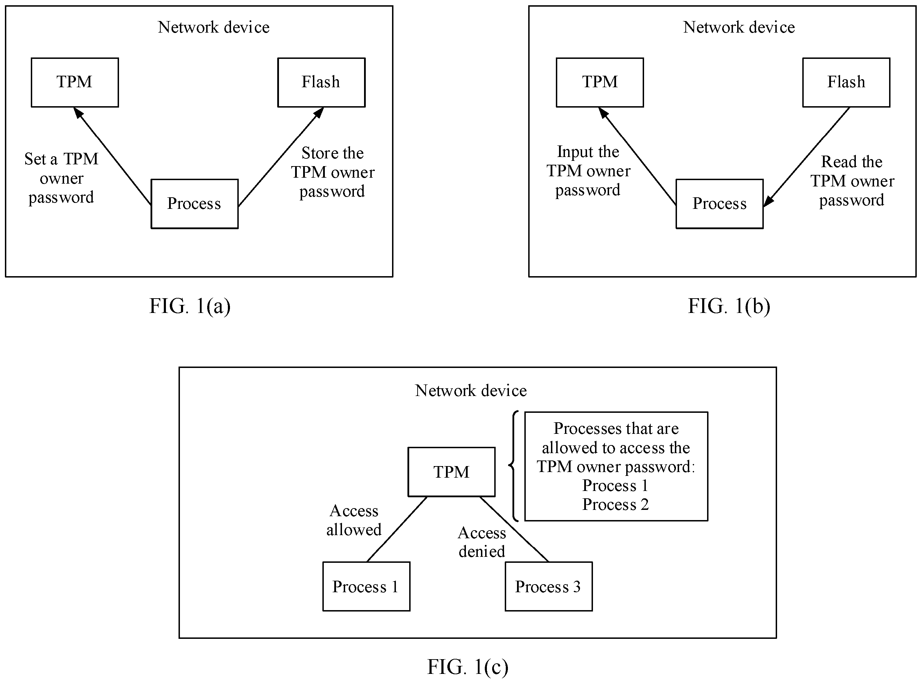

Usually, in the network device, the TPM owner password is stored by using a flash memory (flash memory, Flash) storage and access control technology. FIG. 1(a) to FIG. 1(c) are a schematic diagram of storing and using a TPM owner password according to an embodiment of this application. As shown in FIG. 1(a), a software process in a network device may set the TPM owner password by invoking a password setting function of the TPM, and the TPM stores the specified TPM owner password into a flash. As shown in FIG. 1(b), when the software process in the network device needs to use the TPM owner password, the software process obtains the TPM owner password from the flash, and then transfers the obtained TPM owner password to the TPM, to invoke a related function of the TPM. As shown FIG. 1(c), an access control policy is imposed on the flash, so that only a process with authorized access rights can access the TPM owner password stored in the flash. For example, when processes allowed to access the flash are set to a process 1 and a process 2, the process 1 and the process 2 can access and read the TPM owner password in the flash, and a process 3 cannot access any content in the flash.

The storage manner of the TPM owner password mainly depends on the rights access control policy on the flash to restrict the process that reads the TPM owner password. There is a risk that an unauthorized process bypasses the rights access control policy to directly obtain the TPM owner password. Because the TPM owner password is stored in the flash in a plaintext form, the unauthorized process can obtain the TPM owner password after bypassing the rights access control policy on the flash. Consequently, the current storage manner of the TPM owner password in the network device has relatively low security.

In view of this, embodiments of this application provide a password management method and a related apparatus. A chip encrypts a TPM owner password, and stores a ciphertext obtained after the encryption in the chip, so that the TPM owner password is stored in the chip in a ciphertext form. This improves security of the TPM owner password in the storage process, and effectively ensures secure use of the TPM owner password.

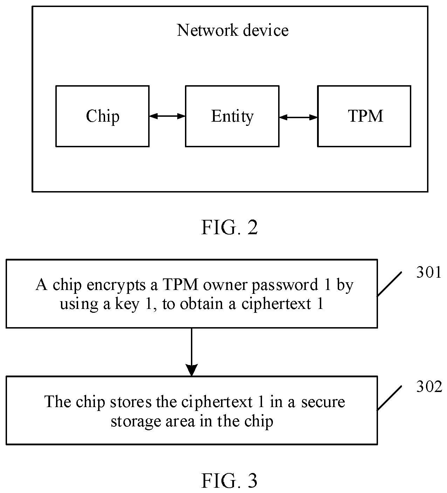

FIG. 2 is a schematic diagram of an application scenario of a password management method according to an embodiment of this application. As shown in FIG. 2, a network device includes a chip and a TPM. When the network device runs, an entity in the network device may communicate with the TPM. The entity may set a TPM owner password of the TPM by invoking a password setting function of the TPM. The entity may also communicate with the chip to send the specified TPM owner password to the chip, and the chip stores the TPM owner password in a ciphertext form. When the entity needs to invoke, in the TPM, a related function of performing verification on the TPM owner password, the entity obtains the TPM owner password obtained through decryption from the chip, and transfers the TPM owner password to the TPM, to invoke the related function of the TPM. The network device may be a physical entity device connected to a network, such as a router, a switch, a gateway, or a hub. A type of the network device is not specifically limited herein.

In embodiments, the entity is a hardware module or a software process that is in the network device including the chip and that can send a message. For example, the entity may be a software process that is running in the network device. The entity may communicate with the TPM and invoke a related function of the TPM, to ensure information security of the network device.

FIG. 3 is a schematic flowchart of a password management method 300 according to an embodiment of this application. As shown in FIG. 3, the password management method 300 provided in this embodiment of this application includes the following steps.

301: A chip encrypts a TPM owner password 1 by using a key 1, to obtain a ciphertext 1.

The TPM owner password 1 may be preset in the chip. For example, when the chip is delivered from a factory, operation and maintenance personnel send the to-be-stored TPM owner password 1 to the chip by invoking an interface in the chip, so that the chip obtains the to-be-stored TPM owner password 1.

After the chip obtains the to-be-stored TPM owner password 1, the chip encrypts the TPM owner password 1 by using the key 1 and an encryption algorithm preset in the chip, to obtain the ciphertext 1. The ciphertext 1 is the encrypted TPM owner password 1.

In this embodiment, the chip may encrypt the TPM owner password 1 by using a symmetric encryption algorithm. The symmetric encryption algorithm is that a same key is used to encrypt and decrypt data in a data encryption and decryption process. To be specific, after the chip encrypts the TPM owner password 1 by using the key 1 and the preset encryption algorithm, to obtain the ciphertext 1, when the chip decrypts the first ciphertext, the chip needs to decrypt the ciphertext 1 by using the key 1 and an inverse algorithm of the preset encryption algorithm, to obtain the TPM owner password 1. For example, the symmetric encryption algorithm may specifically include an algorithm such as an advanced encryption standard (advanced encryption standard, AES) algorithm. A specific algorithm used by the chip is not limited herein.

302: The chip stores the ciphertext 1 in a secure storage area in the chip.

The secure storage area may be a storage area that does not provide an access interface for an external entity of the chip, that is, the chip does not support the external entity in accessing the secure storage area, and the external unauthorized entity cannot read the ciphertext in the secure storage area. This ensures ciphertext storage security. The secure storage area may be a part of physical address space in the chip. This part of physical address space can be accessed or read only by a hardware module in the chip, and cannot be accessed or read by the external entity.

In this embodiment, the chip encrypts a TPM owner password, and stores a ciphertext obtained after the encryption in the chip, so that the TPM owner password can be stored in the chip in a ciphertext form. This improves security of the TPM owner password in the storage process, and effectively ensures secure use of the TPM owner password.

In a specific embodiment, the method 300 may further include the following step:

303: The chip obtains a request 1, where the request 1 carries the TPM owner password 1.

The request 1 may be sent by an entity 1 to the chip, and is used to indicate the chip to store the TPM owner password 1. For example, when the entity 1 needs to securely store the TPM owner password by using the chip, the entity 1 may send the request 1 to the chip, and the request 1 carries the to-be-stored TPM owner password 1, so that the chip can obtain the request 1 carrying the TPM owner password 1.

For example, a driver layer program may be deployed between the entity 1 and the chip, to implement communication between the entity 1 and the chip. The entity 1 may send the request 1 to the chip by invoking the driver layer program. In this way, the chip may receive the request 1 sent by the driver layer program, and the request 1 is from the entity 1.

In the method 300, after the chip obtains the request 1, the chip may perform step 301 and step 302 based on the request 1 and the TPM owner password 1 carried in the request 1, that is, the chip performs the steps of encrypting and storing the TPM owner password 1. For details, refer to step 301 and step 302. Details are not described herein again.

It can be learned from the method 300 that, when encrypting the TPM owner password 1, the chip needs to obtain the key 1, so that the chip can encrypt the TPM owner password 1 by using the key 1. The chip may obtain the key 1 in a plurality of manners.

In a specific implementation, the key 1 is a key generated by the chip, and the key 1 is stored in the chip in a plaintext form. Before the chip encrypts the TPM owner password 1 by using the key 1, the chip first obtains the key 1 from an area in which the key 1 is stored, and then encrypts the TPM owner password 1.

In a specific implementation, the first key is a key generated by the chip, and the key 1 is stored in the chip in a ciphertext form. That is, after generating the key 1, the chip encrypts the key 1 to obtain a ciphertext 2 corresponding to the key 1, and then stores the ciphertext 2 in the chip. In this way, before the chip encrypts the TPM owner password 1 by using the key 1, the chip may first obtain the ciphertext 2 from an area in which the ciphertext 2 is stored, decrypt the ciphertext 2 to obtain the key 1, and encrypt the TPM owner password 1 by using the key 1.

Specifically, the key 1 may be a key derived from a root key of the chip, or may be a key generated based on a PUF. The PUF may output a unique identity by extracting a process parameter offset inevitably introduced in a chip manufacturing process. The identity may be used as the key 1.

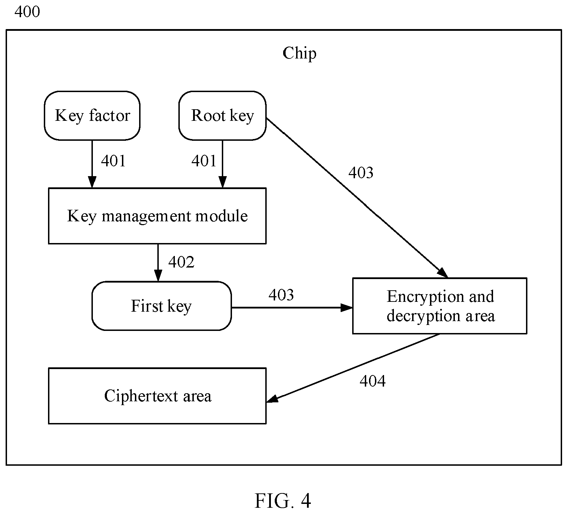

An example in which the key is the key derived from the root key of the chip is used. The following specifically describes a generation process of the key 1 with reference to FIG. 4.

FIG. 4 is a schematic flowchart of a key generation method 400 according to an embodiment of this application. As shown in FIG. 4, the password management method 400 provided in this embodiment of this application includes the following steps.

401: A key management (Key Management, KM) module in a chip obtains a root key and a key factor.

The root key is a key permanently stored in the chip, and is unique. The chip can derive different subkeys based on the root key and a corresponding key derivation algorithm. The key factor is a randomly generated salt (salt), and is used to generate subkeys with reference to the root key. Different key factors can be used to derive different subkeys with reference to the root key. The key factor may be stored in a plaintext area in the chip in a plaintext form.

402: The KM module generates a key 1 based on the root key and the key factor.

403: An encryption and decryption area in the chip obtains the key 1 and the root key.

The encryption and decryption area is a hardware module into which an encryption and decryption algorithm is integrated in the chip, and can encrypt and decrypt the key 1 and further encrypt and decrypt the TPM owner password 1 based on the key 1.

404: The encryption and decryption area encrypts the key 1 by using the root key, to obtain a ciphertext 2, and stores the ciphertext 2 in a ciphertext area in the chip.

When the key 1 is encrypted and stored in the ciphertext area, if the chip needs to encrypt the TPM owner password 1 by using the key 1, the chip may obtain the ciphertext 2 corresponding to the key 1 from the ciphertext area, and then decrypt the ciphertext 2 by using the root key, to obtain the key 1.

In this embodiment, after the key 1 is generated, the key 1 is encrypted by using the root key, and then the encrypted key 1 is stored in the ciphertext area. This can improve storage security of the key 1, and further ensure security of the TPM owner password 1 encrypted by using the key 1.

In a specific implementation, step 301 in the method 300 may specifically include: The chip encrypts the TPM owner password 1 by using the key 1 and plaintext information.

The plaintext information is encryption information stored in the chip in a plaintext form, and may be stored in the plaintext area in the chip. For example, the plaintext information may include one or more of a salt and an IV. When the TPM owner password 1 is encrypted by using the key 1 and the plaintext information, the encrypted TPM owner password 1 can be decrypted only by using the key 1 and the plaintext information.

For example, in the process of encrypting the TPM owner password 1 by using the key 1 and the salt, the TPM owner password 1 may be first encrypted by using the key 1, to obtain a ciphertext 3, and then the ciphertext 3 is spliced with the salt to obtain the ciphertext 1, to encrypt the TPM owner password 1. Alternatively, the TPM owner password 1 may be first spliced with the salt, and then the spliced password is encrypted by using the key 1, to obtain the ciphertext 1, to encrypt the TPM owner password 1. It may be understood that, when the ciphertext 3 or the TPM owner password 1 is spliced with the salt, the salt may be spliced to any location of the ciphertext 3 or the TPM owner password 1, for example, spliced before, after, or in the middle of the ciphertext 3 or the TPM owner password 1, or may be spliced after being split, or may be spliced in reverse order. A specific splicing manner of the salt is not limited herein. The salt may be a random number randomly generated by the chip, and corresponds to the TPM owner password 1 and is stored in the chip.

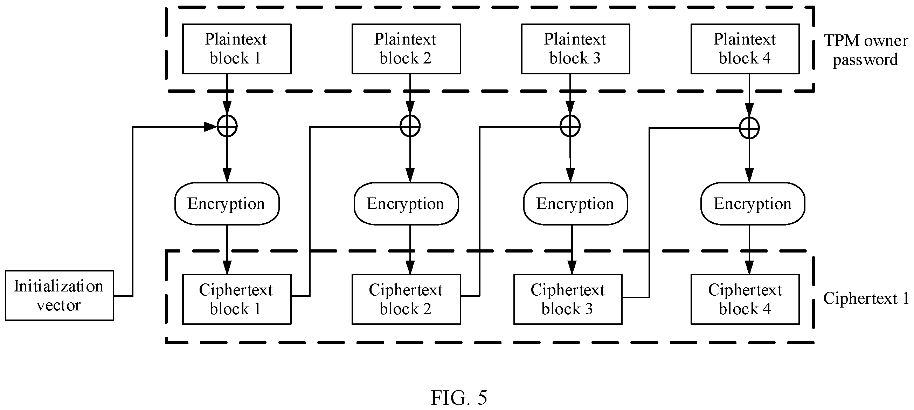

For example, in some embodiments, in the process of encrypting the TPM owner password 1 by using the key 1 and the IV, the TPM owner password 1 serving as plaintext is split into a plurality of plaintext blocks for sorting. During encryption, an exclusive OR operation (XOR operation) is performed on the IV and a first plaintext block, and then encryption is performed by using the key 1, to obtain a first ciphertext block. After an exclusive OR operation is performed on a subsequent plaintext block and the previous ciphertext block, then encryption is performed, and finally a plurality of ciphertext blocks are obtained. The plurality of ciphertext blocks constitute a first ciphertext corresponding to the TPM owner password 1. For details, refer to FIG. 5. FIG. 5 is a schematic flowchart of performing encryption by using a key 1 and an IV according to an embodiment of this application.

For example, in some embodiments, the TPM owner password 1 may alternatively be encrypted by using the key 1, the salt, and the IV. For example, after the ciphertext is obtained through encryption by using the key 1 and the IV, the salt is spliced with the ciphertext to obtain the ciphertext 1 corresponding to the TPM owner password 1.

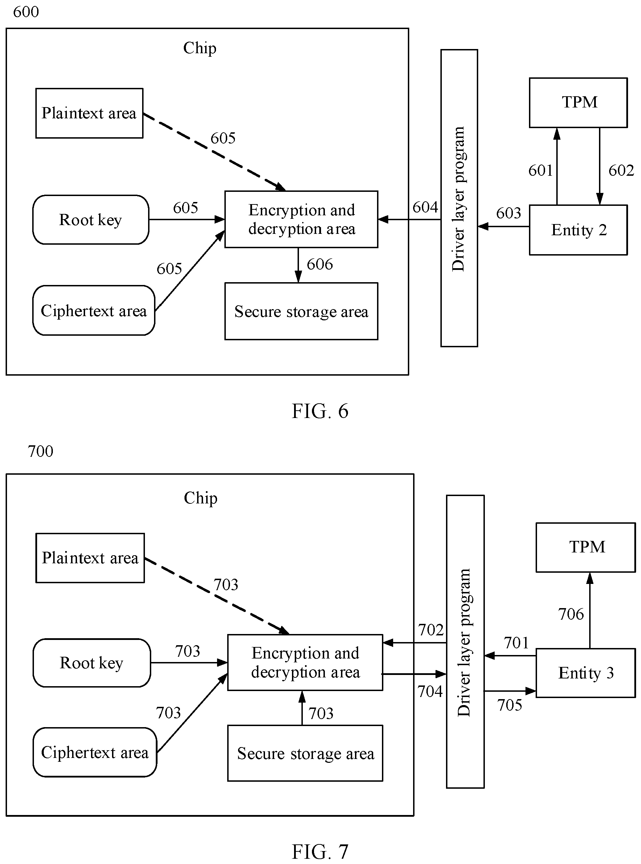

FIG. 6 is a schematic flowchart of a password management method 600 according to an embodiment of this application. As shown in FIG. 6, the password management method 600 provided in this embodiment of this application includes the following steps.

601: An entity 2 sends a password setting instruction to a TPM.

The entity 2 may send the password setting instruction to the TPM, to invoke an owner password setting function in the TPM to set a TPM owner password 1. That the entity 2 sets a TPM owner password 1 may be specifically as follows: The entity 2 generates a random number, and then transfers the random number to the TPM, so that the TPM sets the random number as the TPM owner password 1. Alternatively, the TPM generates a random number, and uses the random number as the TPM owner password 1. A manner in which the entity 2 sets the TPM owner password 1 is not specifically limited herein.

602: The TPM sends the specified TPM owner password 1 to the entity 2.

After the TPM owner password 1 is set, the TPM returns the specified TPM owner password 1 to the entity 2.

603: The entity 2 sends a request 2 to a driver layer program.

The entity 2 invokes the driver layer program, and sends the request 2 to a chip by using the driver layer program. The request 2 may carry the to-be-stored TPM owner password 1.

604: The driver layer program sends the request 2 to the chip.

The driver layer program may forward the request 1 to the chip according to instructions.

605: The chip encrypts the TPM owner password 1 based on the request 2 by using the key 1, to obtain a ciphertext 1.

When the chip needs to encrypt a TPM owner password by using a key and plaintext information, after obtaining the request 2, the chip may respectively obtain plaintext information 1 and a key 1 from a plaintext area and a ciphertext area, and encrypt the TPM owner password 1 in an encryption and decryption area by using the plaintext information 1 and the key 1, to obtain the ciphertext 1.

When the chip needs to encrypt a TPM owner password only by using a key, after obtaining the request 2, the chip may obtain a key 1 from a ciphertext area, and encrypt the TPM owner password 1 in an encryption and decryption area by using the key 1, to obtain the ciphertext 1.

When the key 1 is not encrypted, the encryption and decryption area in the chip may directly obtain the key 1 from the ciphertext area. When the key 1 is encrypted by using a root key, the chip obtains the root key, obtains a ciphertext corresponding to the key 1 from the ciphertext area, and decrypts the ciphertext corresponding to the key 1 by using the root key, to obtain the key 1.

In step 606, the chip stores the ciphertext 1 in a secure storage area.

In this embodiment, a chip obtains a request of an entity, encrypts a TPM owner password based on the request of the entity, and stores a ciphertext obtained after the encryption in the chip, so that the TPM owner password can be securely stored in the chip in a ciphertext form. This reduces a risk of disclosure of the TPM owner password in the storage process, improves security of the TPM owner password in the storage process, and effectively ensures secure use of the TPM owner password.

FIG. 7 is a schematic flowchart of a password management method 700 according to an embodiment of this application. As shown in FIG. 7, the password management method 700 provided in this embodiment of this application includes the following steps.

701: An entity 3 sends a request 3 to a driver layer program.

After a chip stores a ciphertext corresponding to a TPM owner password in a secure storage area in the chip, when the entity 3 needs to invoke, in a TPM, a related function of performing verification on the TPM owner password, the entity 3 may send the request 3 to the chip by using the driver layer program, to request the chip to return the TPM owner password obtain through decryption. The entity 3 and the entity 2 in the embodiment corresponding to FIG. 6 may be a same entity, or the entity 3 and the entity 2 in the embodiment corresponding to FIG. 6 may be different entities. This is not limited herein.

In step 702, the driver layer program sends the request 3 to the chip.

For example, after obtaining the request 3 sent by the entity 3, the driver layer program may forward the request 3 to the chip according to instructions.

For example, the request 3 may carry an identity of the entity 3, and the identity is used to indicate an identity of the entity 3 to the chip. That is, after obtaining the request 3, the chip may determine, based on the identity in the request 3, an entity that requests password decryption.

In step 703, the chip obtains a key 1 and a ciphertext 1, and decrypts the ciphertext 1 by using the key 1, to obtain a TPM owner password 1.

The key 1 is a key used to encrypt the TPM owner password 1 in the chip, and the ciphertext 1 is a ciphertext obtained after the TPM owner password 1 is encrypted by using the key 1.

In a specific implementation, when the request 3 carries the identity of the entity 3, the chip may determine the identity of the entity 3 based on the identity, and determine whether the entity 3 has rights to request password decryption. If the chip determines that the entity 3 has rights to request password decryption, the chip may decrypt a first ciphertext; otherwise, the chip rejects the request 3. For example, an entity having password decryption rights may be preset in the chip. For example, a plurality of entities having password decryption rights are preset in the chip. The entity having password decryption rights may alternatively be determined by the chip based on an entity that stores the TPM owner password. To be specific, after the chip receives a request used to indicate the chip to store a TPM owner password, and stores the TPM owner password, the chip may determine, based on an identity carried in the request, the entity having password decryption rights, and an entity other than the entity has no password decryption rights, to restrict an unauthorized entity to requesting the chip to decrypt the TPM owner password.

For example, when the chip encrypts the TPM owner password 1 by using the key 1 and plaintext information, the chip may respectively obtain the key 1, the plaintext information, and the ciphertext 1 from a ciphertext area, a plaintext area, and a secure storage area, and then decrypt, based on an encryption and decryption area, the ciphertext 1 by using the key 1 and the plaintext information, to obtain the TPM owner password 1.

For example, when the chip encrypts the TPM owner password 1 by using the key 1, the chip may respectively obtain the key 1 and the ciphertext 1 from a ciphertext area and a secure storage area, and then decrypt, based on an encryption and decryption area, the ciphertext 1 by using the key 1, to obtain the TPM owner password 1.

In a specific implementation, when the key 1 is not encrypted, the chip may directly obtain the key 1 from a ciphertext area. When the key 1 is encrypted by using a root key, the chip may obtain the root key and a ciphertext corresponding to the key 1, and decrypt the ciphertext corresponding to the key 1 by using the root key, to obtain the key 1.

In step 704, the chip sends the TPM owner password 1 to the driver layer program.

For example, in response to the request 3 sent by the entity 3, after the chip obtains the TPM owner password 1 through decryption, the chip sends the TPM owner password 1 to the driver layer program, so that the driver layer program sends the TPM owner password 1 to the entity 3.

In step 705, the driver layer program sends the TPM owner password 1 to the entity 3.

In step 706, the entity 3 sends the TPM owner password 1 to the TPM.

After obtaining the TPM owner password 1, the entity 3 may send the TPM owner password 1 to the TPM. The TPM performs verification on the TPM owner password 1 sent by the entity 3, and after the verification on the TPM owner password 1 succeeds, the TPM allows the entity 3 to invoke a related function of the TPM.

In this embodiment, after a chip stores a TPM owner password, an entity sends a request to the chip, so that the chip decrypts, based on the request, a ciphertext of the TPM owner password stored in the chip, and returns the TPM owner password obtained after the decryption to the entity. This can ensure that the entity can securely obtain the TPM owner password from the chip when the chip needs to use the TPM owner password, and ensure security of the TPM owner password.

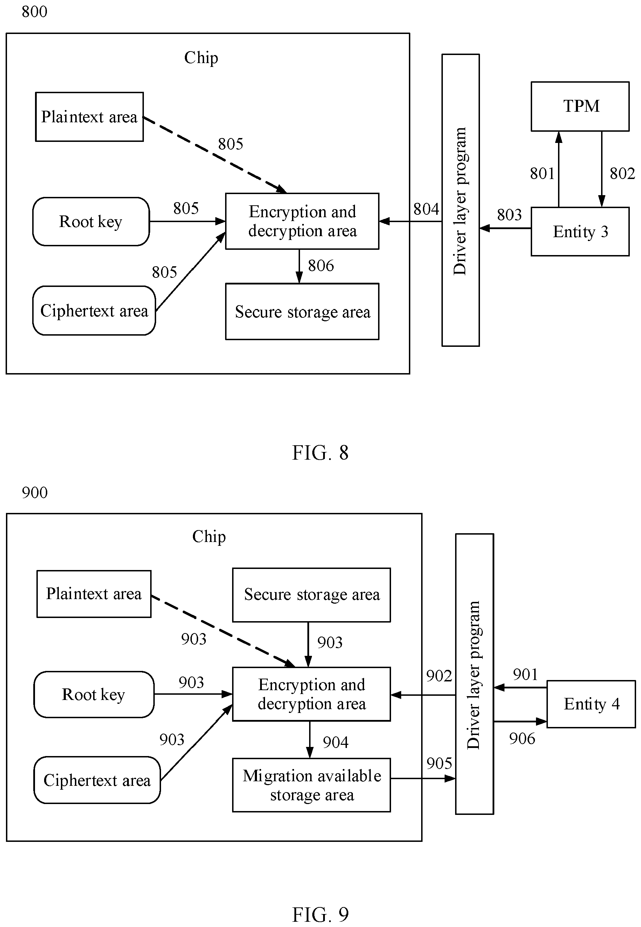

FIG. 8 is a schematic flowchart of a password update method 800 according to an embodiment of this application. As shown in FIG. 8, the password update method 800 provided in this embodiment of this application includes the following steps.

801: An entity 4 requests a TPM to update a TPM owner password.

The entity 4, the entity 2 in the embodiment corresponding to FIG. 6, and the entity 3 in the embodiment corresponding to FIG. 7 may be a same entity, or the entity 4, the entity 2, and the entity 3 may be different entities. This is not limited herein.

After a chip stores a first ciphertext in a secure storage area in the chip, the entity 4 may invoke a password setting function of the TPM, to request the TPM to update the TPM owner password.

802: The TPM returns a TPM owner password 2, that is, a TPM owner password obtained after the update, to the entity 4.

After the entity 4 requests the TPM to update the TPM owner password, the TPM updates the TPM owner password, and returns the TPM owner password 2 obtained after the update to the chip. The TPM owner password 2 may be generated by the entity 4. When invoking the password setting function of the TPM, the entity 4 updates the TPM owner password to a randomly generated character string. The TPM owner password 2 may alternatively be generated by the TPM. When obtaining the request used to update the TPM owner password, the TPM may randomly generate a character string, and use the character string as the TPM owner password 2 obtained after the update.

In step 803, the entity 4 sends a request 4 to a driver layer program.

After the entity 4 obtains the TPM owner password 2 returned by the TPM, the entity 4 may send the request 4 to the chip by using the driver layer program, to request the chip to store the new TPM owner password. The request 4 may carry the TPM owner password 2, to indicate the chip to update the TPM owner password 1 to the TPM owner password 2.

In step 804, the driver layer program sends the request 4 to the chip.

In step 805, the chip obtains a key 1.

After the chip obtains the request 4, the chip may encrypt the TPM owner password 2 by using the key 1, or the chip encrypts the TPM owner password 2 by using the key 1 and plaintext information. For example, when the key 1 is not encrypted, the chip may directly obtain the key 1 from a ciphertext area. When the key 1 is encrypted by using a root key, the chip may obtain the root key and a ciphertext 2 corresponding to the key 1, and decrypt the ciphertext 2 corresponding to the key 1 by using the root key, to obtain the key 1.

In a specific implementation, when the chip encrypts the TPM owner password 2 by using the key 1 and the plaintext information, the chip may randomly generate new plaintext information based on the request 4. For example, the chip randomly generates a new salt and/or a new IV based on the request 3.

In step 806, the chip encrypts the TPM owner password 2 by using the key 1, and stores a ciphertext 4 obtained after the encryption in the secure storage area.

After the chip obtains a first key, the chip may encrypt the TPM owner password 2 by using the key 1 and a preset encryption algorithm, to obtain the ciphertext 4, or the chip encrypts the TPM owner password 2 by using the key 1, the plaintext information, and the preset encryption algorithm, to obtain the ciphertext 4.

In a specific implementation, the chip may replace the ciphertext 1 in the secure storage area with the ciphertext 4, that is, delete the ciphertext 1 in the secure storage area, and use the ciphertext 4 as a ciphertext corresponding to the new TPM owner password, to update the TPM owner password.

In this embodiment, an entity sends a request to a chip, so that the chip replaces an originally stored TPM owner password with a new TPM owner password based on the request. This can periodically update the TPM owner password, improve security of the TPM owner password, and ensure information security of a network device.

FIG. 9 is a schematic flowchart of a password migration method 900 according to an embodiment of this application. As shown in FIG. 9, the password migration method 900 provided in this embodiment of this application includes the following steps.

901: An entity 5 sends a request 5 to a driver layer program, where the request 5 carries a key 2, to indicate a chip to migrate a TPM owner password.

The entity 5, the entity 2 in the embodiment corresponding to FIG. 6, the entity 3 in the embodiment corresponding to FIG. 7, and the entity 4 in the embodiment corresponding to FIG. 8 may be a same entity, or the entity 5, the entity 2, the entity 3, and the entity 4 may be different entities. This is not limited herein.

In a specific implementation, when the TPM owner password needs to be migrated to another network device, a request 5 may be sent to the chip, so that after encrypting the TPM owner password by using an external key, the chip migrates a ciphertext obtained after the encryption to the external network device. For example, when a TPM is embedded in a network device in a pluggable manner, if the network device into which the TPM is inserted is faulty or needs to be replaced, the TPM may be unplugged from the network device and migrated to another network device. Because the TPM has a unique TPM owner password, and the TPM owner password is stored in the chip of the current network device in a ciphertext form, the TPM owner password stored in the chip may be migrated.

In a specific implementation, the entity 5 may receive a message sent by another network device, to obtain the key 2. Alternatively, the entity 5 may read a configuration file preset in the network device, to obtain the key 2. Alternatively, the entity 5 may obtain information entered by personnel in a command line form, to obtain the key 2. A specific manner in which the entity 5 obtains the key 2 is not limited herein.

902: The driver layer program sends the request 5 to the chip.

903: The chip obtains a key 1 and a ciphertext 1, and decrypts the ciphertext 1 by using the key 1, to obtain a TPM owner password 1.

It should be noted that, when the TPM owner password stored in the chip is a TPM owner password 2 obtained after the update, the chip may obtain the key 1 and a ciphertext 4, and decrypts the ciphertext 4 by using the key 1, to obtain the TPM owner password 2. For ease of description, the following uses an example in which the TPM owner password stored in the chip is the TPM owner password 1 for description.

Because the TPM owner password 1 is stored in the chip in a ciphertext form, when the TPM owner password 1 needs to be encrypted by using another key, the TPM owner password 1 may be first obtained after the decryption.

In a specific implementation, when the chip encrypts the TPM owner password 1 by using the key 1, the chip may respectively obtain the key 1 and the ciphertext 1 from a ciphertext area and a secure storage area, and decrypt the ciphertext 1 by using the key 1, to obtain the TPM owner password 1.

In a specific implementation, when the chip encrypts the TPM owner password 1 by using the key 1 and plaintext information, the chip may respectively obtain the key 1, the plaintext information, and the ciphertext 1 from a ciphertext area, a plaintext area, and a secure storage area, and decrypt the ciphertext 1 by using the key 1 and the plaintext information, to obtain the TPM owner password 1.

904: The chip encrypts, by using the key 2, the TPM owner password 1 obtained after the decryption, to obtain a ciphertext 5.

In a specific implementation, the chip may store the ciphertext 5 in a migration available storage area.

After the chip imports the external key 2, the chip may encrypt, by using the key 2, the TPM owner password 1 obtained after the decryption, to obtain the to-be-migrated ciphertext 5.

For example, the migration available storage area may be an area that is in the chip and that provides an access interface for an external entity. After the chip stores information in the migration available storage area, the chip may send, to the driver layer, the information stored in the migration available storage area.

905: The chip sends the ciphertext 5 to the driver layer program.

906: The driver layer program sends the ciphertext 5 to the entity 5.

In a specific implementation, the driver layer program may send the ciphertext 5 to the entity 5, so that the ciphertext 5 can be migrated from the network device by using the entity 5. For example, the entity 5 may transfer the obtained ciphertext 5 to a device (for example, another network device or a pluggable storage device) connected to the network device, to migrate the ciphertext 5.

In this embodiment, a chip imports an external key, encrypts a TPM owner password by using the external key, and migrates the encrypted TPM owner password from a network device in a ciphertext form. This can effectively and securely migrate the TPM owner password.

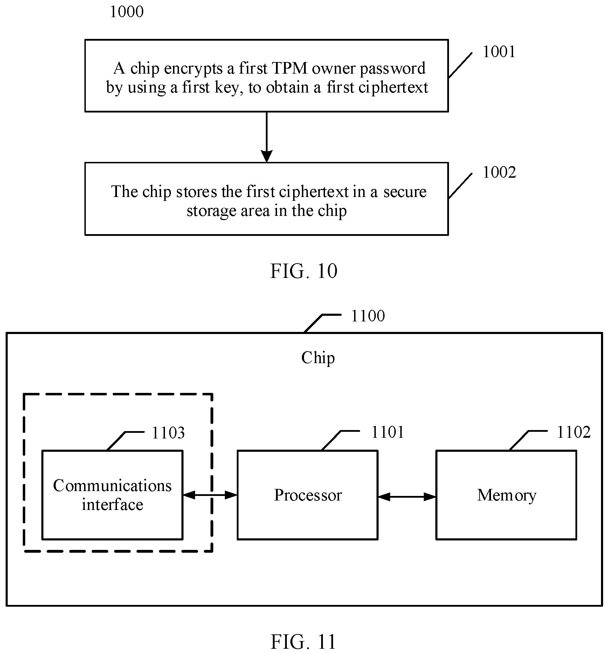

FIG. 10 is a schematic flowchart of a password management method 1000 according to an embodiment of this application. As shown in FIG. 9, the password management method 1000 provided in this embodiment of this application includes the following steps.

1001: A chip encrypts a first TPM owner password by using a first key, to obtain a first ciphertext.

The method 1000 may be performed to implement the method 300, 400, 600, 700, 800, or 900 in the foregoing embodiments. When the method 1000 is performed to implement the method 300, the first key may be the key 1 in the method 300, the first TPM owner password may be the TPM owner password 1 in the method 300, and the first ciphertext may be the ciphertext 1 in the method 300.

1002: The chip stores the first ciphertext in a secure storage area in the chip.

In a specific implementation, the first key is a key generated by the chip, and the first key is stored in the chip in a plaintext form.

In a specific implementation, the first key is a key generated by the chip, and the first key is stored in the chip in a ciphertext form.

In a specific implementation, the first key is a key derived from a root key of the chip. For example, a process of generating the first key may be the process described in the method 400.

In a specific implementation, before the chip encrypts the first TPM owner password by using the first key, the method further includes: The chip obtains a first request, where the first request carries the first TPM owner password. The chip stores the first TPM owner password based on the first request.

For example, the first request may be the request 1 in the method 300 or the request 2 in the method 600, the first key may be the key 1 in the method 300 or the method 600, the first TPM owner password may be the TPM owner password in the method 300 or the method 600, and the first ciphertext may be the ciphertext 1 in the method 300 or the method 600.

In a specific implementation, after the chip stores the first ciphertext in the secure storage area in the chip, the method further includes: The chip obtains a second request sent by a first entity. The chip decrypts the first ciphertext based on the second request by using the first key, to obtain the first TPM owner password. The chip sends the first TPM owner password to the first entity.

For example, the first entity may be the entity 3 in the method 700, and the second request may be the request 3 in the method 700.

In a specific implementation, after the chip stores the first ciphertext in the secure storage area in the chip, the method further includes: The chip obtains a third request sent by a second entity, where the third request carries a second TPM owner password. The chip encrypts the second TPM owner password by using the first key, to obtain a second ciphertext. The chip replaces the first ciphertext in the secure storage area with the second ciphertext.

For example, the second entity may be the entity 4 in the method 800, the third request may be the request 4 in the method 800, the second TPM owner password may be the TPM owner password 2 in the method 800, and the second ciphertext may be the ciphertext 4 in the method 800.

In a specific implementation, after the chip stores the first ciphertext in the secure storage area, the method further includes: The chip obtains a fourth request sent by a third entity, where the fourth request carries a second key. The chip decrypts the first ciphertext by using the first key, to obtain the first TPM owner password. The chip encrypts the first TPM owner password by using the second key, to obtain a third ciphertext. The chip sends the third ciphertext to the third entity.

For example, the third entity may be the entity 5 in the method 900, the fourth request may be the request 5 in the method 900, the first TPM owner password may be the TPM owner password 1 in the method 900, and the third ciphertext may be the ciphertext 5 in the method 900.

In a specific implementation, that a chip encrypts a first TPM owner password by using a first key includes: The chip encrypts the first TPM owner password by using the first key and plaintext information, where the plaintext information is encryption information stored in the chip in a plaintext form.

FIG. 11 is a schematic diagram of a structure of a chip 1100 according to an embodiment of this application. The chip 1100 provided in this embodiment of this application is configured to implement any one of the method 300, the method 400, and the method 600 to the method 1000. The chip 1100 includes a processor 1101 and a memory 1102. The processor 1101 is configured to implement a processing-related operation, and the memory 1102 is configured to store information. For example, when the chip 1100 is configured to implement the method 1000, the processor 1101 encrypts a first TPM owner password by using a first key, to obtain a first ciphertext. The memory 1102 is configured to store the first ciphertext in a secure storage area.

In a specific implementation, the first key is a key generated by the chip, and the first key is stored in the chip in a plaintext form.

In a specific implementation, the first key is a key generated by the chip, and the first key is stored in the chip in a ciphertext form.

In a specific implementation, the first key is a key derived from a root key of the chip.

In a specific implementation, the chip 1100 further includes a communications interface 1103, and the communications interface 1103 is configured to perform receiving and sending operations. For example, when the chip 1100 is configured to implement the method 1000, the communications interface 1103 is configured to obtain a first request, where the first request carries the first TPM owner password memory.

In this application, the processor may be, for example, a circuit configured to implement a processing function, or may be another processor that can implement a processing function, for example, a microprocessor. The processor may include one or more processors. The memory may be, for example, a circuit configured to implement a storage function, or may be another memory that can implement a storage function. The memory may include one or more memories. Specific forms of the processor and the memory are not specifically limited in this application.

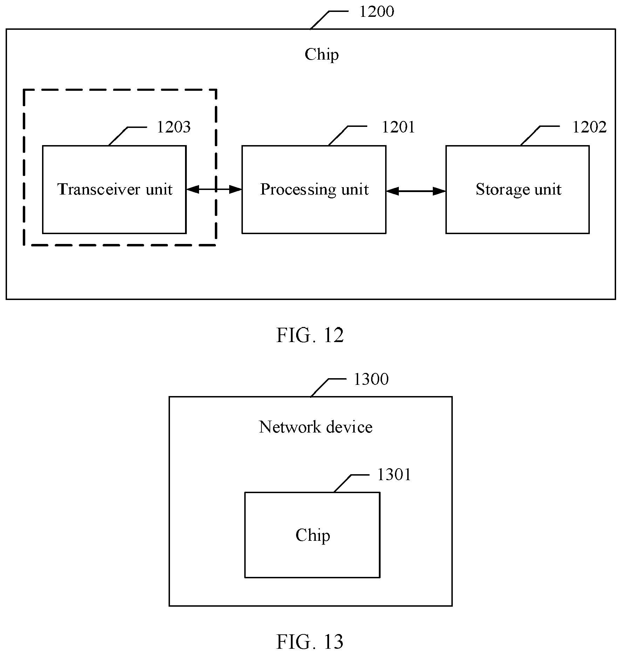

FIG. 12 is a schematic diagram of a structure of a chip 1200 according to an embodiment of this application. The chip 1200 provided in this embodiment of this application is configured to implement any one of the method 300, the method 400, and the method 600 to the method 1000. The chip 1200 includes a processing unit 1201 and a storage unit 1202. The processing unit 1201 is configured to implement a processing-related operation, and the storage unit 1202 is configured to store information. For example, when the chip 1200 is configured to implement the method 1000, the processing unit 1201 is configured to encrypt a first TPM owner password by using a first key, to obtain a first ciphertext. The storage unit 1202 is configured to store the first ciphertext in a secure storage area.

In a specific implementation, the first key is a key generated by the chip, and the first key is stored in the chip in a plaintext form.

In a specific implementation, the first key is a key generated by the chip, and the first key is stored in the chip in a ciphertext form.

In a specific implementation, the first key is a key derived from a root key of the chip.

In a specific implementation, the chip further includes a transceiver unit 1203, and the transceiver unit 1203 is configured to perform receiving and sending operations. When the chip 1200 is configured to implement the method 1000, the transceiver unit 1203 is configured to obtain a first request, where the first request carries the first TPM owner password. The transceiver unit 1203 in the chip 1200 may be implemented by a communications interface, the processing unit 1201 may be implemented by a processor, and the storage unit 1202 may be implemented by a memory.

FIG. 13 is a schematic diagram of a structure of a network device 1300 according to an embodiment of this application. The network device 1300 provided in this embodiment of this application includes a chip 1301 for the embodiment in FIG. 11 or FIG. 12. The chip 1301 is configured to perform the methods in the embodiments corresponding to FIG. 3 to FIG. 9.

A person skilled in the art may clearly understand that, for the purpose of convenient and brief descriptions, for a detailed working process of the foregoing system, apparatus, and unit, refer to a corresponding process in the foregoing method embodiments. Details are not described again herein.

In the several embodiments provided in this application, it should be understood that the disclosed system, apparatuses, and methods may be implemented in another manner. For example, the described apparatus embodiments are merely examples. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

## Claims

1. A password management method, wherein the method comprises:
encrypting, by a chip, a first trusted platform module TPM owner password by using a first key, to obtain a first ciphertext; and
storing, by the chip, the first ciphertext in a secure storage area in the chip.

2. The method according to claim 1, wherein the first key is a key generated by the chip, and the first key is stored in the chip in a plaintext form.

3. The method according to claim 1, wherein the first key is a key generated by the chip, and the first key is stored in the chip in a ciphertext form.

4. The method according to claim 2 or 3, wherein the first key is a key derived from a root key of the chip.

5. The method according to any one of claims 1 to 4, wherein before the encrypting, by a chip, a first TPM owner password by using a first key, the method further comprises:
obtaining, by the chip, a first request, wherein the first request carries the first TPM owner password; and
storing, by the chip, the first TPM owner password based on the first request.

6. The method according to any one of claims 1 to 5, wherein after the storing, by the chip, the first ciphertext in a secure storage area in the chip, the method further comprises:
obtaining, by the chip, a second request sent by a first entity;
decrypting, by the chip, the first ciphertext based on the second request by using the first key, to obtain the first TPM owner password; and
sending, by the chip, the first TPM owner password to the first entity.

7. The method according to any one of claims 1 to 6, wherein after the storing, by the chip, the first ciphertext in a secure storage area in the chip, the method further comprises:
obtaining, by the chip, a third request sent by a second entity, wherein the third request carries a second TPM owner password;
encrypting, by the chip, the second TPM owner password by using the first key, to obtain a second ciphertext; and
replacing, by the chip, the first ciphertext in the secure storage area with the second ciphertext.

8. The method according to any one of claims 1 to 5, wherein after the storing, by the chip, the first ciphertext in a secure storage area, the method further comprises:
obtaining, by the chip, a fourth request sent by a third entity, wherein the fourth request carries a second key;
decrypting, by the chip, the first ciphertext by using the first key, to obtain the first TPM owner password;
encrypting, by the chip, the first TPM owner password by using the second key, to obtain a third ciphertext; and
sending, by the chip, the third ciphertext to the third entity.

9. The password management method according to any one of claims 1 to 8, wherein the encrypting, by a chip, a first TPM owner password by using a first key comprises:
encrypting, by the chip, the first TPM owner password by using the first key and plaintext information, wherein the plaintext information is encryption information stored in the chip in a plaintext form.

10. A chip, comprising a processor and a memory, wherein
the processor is configured to encrypt a first TPM owner password by using a first key, to obtain a first ciphertext; and
the memory is configured to store the first ciphertext in a secure storage area.

11. The chip according to claim 10, wherein the first key is a key generated by the chip, and the first key is stored in the chip in a plaintext form.

12. The chip according to claim 10, wherein the first key is a key generated by the chip, and the first key is stored in the chip in a ciphertext form.

13. The chip according to claim 11 or 12, wherein the first key is a key derived from a root key of the chip.

14. The chip according to any one of claims 10 to 13, wherein the chip further comprises a communications interface, and the communications interface is configured to obtain a first request, wherein the first request carries the first TPM owner password; and
the memory is further configured to store the first TPM owner password based on the first request.

15. The chip according to any one of claims 10 to 14, wherein the chip further comprises a communications interface, and the communications interface obtains a second request sent by a first entity;
the processor is further configured to decrypt the first ciphertext based on the second request by using the first key, to obtain the first TPM owner password; and
the communications interface is further configured to send the first TPM owner password to the first entity.

16. The chip according to any one of claims 10 to 15, wherein the chip further comprises a communications interface, and the communications interface is configured to obtain a third request sent by a second entity, wherein the third request carries a second TPM owner password; and
the processor is further configured to: encrypt the second TPM owner password by using the first key, to obtain a third ciphertext; and replace the first ciphertext in the secure storage area with the third ciphertext.

17. The chip according to any one of claims 10 to 15, wherein the chip further comprises a communications interface, and the communications interface is configured to obtain a fourth request sent by a third entity, wherein the fourth request carries a second key;
the processor is further configured to: decrypt the first ciphertext by using the first key, to obtain the first TPM owner password; and encrypt the first TPM owner password by using the second key, to obtain a fourth ciphertext; and
the communications interface is further configured to send the fourth ciphertext to the third entity.

18. The chip according to any one of claims 10 to 17, wherein the processor is further configured to encrypt the first TPM owner password by using the first key and plaintext information, wherein the plaintext information is encryption information stored in the chip in a plaintext form.

19. A network device, comprising the chip according to any one of claims 10 to 18.

20. A computer storage medium, comprising computer instructions, wherein when the computer instructions are run on a processor, the processor is enabled to perform the password management method according to any one of claims 1 to 9.
